# EUROPÄISCHE PATENTANMELDUNG

(11) **EP 1 380 702 A1**
(43) Veröffentlichungstag der Anmeldung: **14.01.2004**
(21) Anmeldenummer: 03015763.0
(22) Anmeldetag: 10.07.2003
(51) Int. Cl.: E04B 5/02, E04C 2/52

(54) **Holz-Beton-Verbundelement mit integriertem Klimaelement**

(30) Priorität: 10.07.2002 DE 20210714 U
(71) Anmelder: Bauer, Werner, 98673 Oberwind (DE)
(72) Erfinder: Bauer, Werner, 98673 Oberwind (DE)
(74) Vertreter: Engel, Christoph Klaus

(57) **Zusammenfassung**

Die Erfindung betrifft ein Holz-Beton-Verbundelement, welches ein Holzbauteil (1) und ein Betonbauteil (2) umfasst, wobei das Holzbauteil und das Betonbauteil entlang einer Verbundfläche (3) aneinandergrenzen. Diese Verbundelement zeichnet sich dadurch aus, dass innerhalb des Betonbauteils (2) ein Wärmetransport- oder Wärmeerzeugungselement (8) angeordnet ist, welches über Wärmeaustauschflächen im Wesentlichen gleichmäßig über die Fläche des Betonbauteils verteilt Wärme aufnehmen oder abgeben kann, wobei die Wärmeaustauschflächen des Wärmetransport- oder Wärmeerzeugungselements (8) im Wesentlichen vollständig vom Betonbauteil eingeschlossen sind.

## Beschreibung

Die vorliegende Erfindung betrifft ein Holz-Beton-Verbundelement aus einem Holzbauteil, und einem Betonbauteil, wobei das Holzbauteil und das Betonbauteil entlang einer Verbundfläche aneinandergrenzen. Weiterhin betrifft die Erfindung ein Klimaelement, welches in dieses Holz-Beton-Verbundelement integriert ist.

Holz-Beton-Verbundelemente erlangen bei der Realisierung von Wohn- und Gewerbebauten zunehmende Bedeutung, da sie die Möglichkeit bieten, einerseits mit natürlichen Materialien zu Bauen und andererseits die geforderten Festigkeiten und Brandwiderstandswerte zu erzielen. Holz-Beton-Verbundkonstruktionen zeichnen sich generell dadurch aus, dass durch die kraftschlüssige Kopplung in der Kontaktfläche zwischen Beton und Holz die vorteilhaften Eigenschaften der unterschiedlichen Materialien besser ausgenutzt werden und dadurch optimierte Bauteile mit breiteren Einsatzmöglichkeiten entstehen. Der Kraftschluss zwischen dem Holzbauteil und dem Betonbauteil kann durch nachgiebige, mechanische Verbindungselemente oder durch starren Haftverbund bzw. Klebefugen hergestellt werden. Bei Deckenkonstruktionen z.B. wird üblicherweise der Beton in der Druckzone und das Holz in der Zugzone angeordnet, wobei die Betonschicht in der Regel dünner als die Holzschicht ausgebildet wird.

Die WO 94/11589 zeigt eine Holz-Beton-Verbunddecke, bei welcher die Verbindung zwischen Holzträgern und einem Betonelement durch Metallplatten hergestellt wird, welche an den Seitenflächen der Holzträger befestigt sind. Ein Problem dieser bekannten Holz-Beton-Verbunddecke besteht darin, daß die Tragfähigkeit begrenzt ist, da nur eine schlechte Kraftübertragung zwischen dem Betonelement und den Holzträgern über die eingesetzten Metallplatten hergestellt wird. In der Verbindungsebene zwischen Holzträgern und Betonelement auftretende Querkräfte können durch die Metallplatten nur unzureichend in die Holzträger eingeleitet werden, da sie an den Seitenflächen der Holzträger angeordnet sind und sich in Längsrichtung der Holzträger erstrecken.

Aus der DE 198 18 525 A1 ist ein Holz-Beton-Verbundelement bekannt, bei welchem das Holzbauteil aus einer Vielzahl von in Brettstapelbauweise zusammengefügten Brettern besteht. Dabei sind Verbundstege ausgebildet, in denen Querkraftanker befestigt sind, die die Verbindung zwischen dem Holzbauteil und dem Betonbauteil herstellen. Generell könnte ein solches Holz-Beton-Verbundelement auch bei der Deckenkonstruktion eingesetzt werden. Wenn dabei die geforderte Tragfähigkeit erzielt werden soll, sind jedoch Konstruktionen erforderlich, bei denen das Brettstapelelement relativ dick ausgebildet ist, so daß insgesamt ein hoher Materialbedarf entsteht. Damit die Tragkräfte aufgenommen werden können, muß daß Brettstapelelement entlang einer Auflagelinie aufgelegt werden, da einzelne Bretter die sich ergebenden Kräfte nicht aufnehmen können.

Aus der DE 200 11 987 ist eine verbesserte Holz-Beton-Verbunddecke bekannt, bei welcher mehrere Querkraftanker vorgesehen sind, die quer zur Längsrichtung in den Holzträgern verlaufen, wobei ein aus dem Holzträger hinausragender Abschnitt der Querkraftanker vom Betonelement eingeschlossen ist. Eine derartige Holz-Beton-Verbunddecke besitzt aufgrund ihrer konstruktiven Gestaltung die Eigenschaften einer sogenannten π-Decke, so daß einzelne Deckenelemente auch durch Aneinanderreihung zu einer größeren Decke zusammengesetzt werden können. Um tragende Funktionen zu übernehmen ist es ausreichend, dass die Holzträger an geeigneten Lagerpunkten aufgelegt werden, was auch unter dem Gesichtspunkt der Wärmedämmung vorteilhaft sein kann, da das Betonelement selbst beispielsweise nicht auf einer Außenwand aufgelegt werden muss.

Da Holz-Beton-Verbundelemente in immer breiterer Anwendung in Bauwerken eingesetzt werden, müssen diese Verbundelemente mit den sonstigen Anforderungen, die sich aus der Nutzung der Bauwerke ergeben, in Einklang gebracht werden. Häufig muss eine erhöhte Tragfähigkeit der Holz-Beton-Verbundelemente realisiert werden, da beispielsweise bei deren Verwendung als Zwischendecke auf der Oberseite ein Estrichfußboden aufgebracht wird, in welchen gegebenenfalls eine Fußbodenheizung integriert wird. Durch derartige Maßnahmen wird außerdem die Bauzeit deutlich verlängert, da der Estrichfußboden erst nach weitgehender Austrocknung des Betonbauteils des Verbundelements hergestellt werden kann. Um bei der Verwendung von Fußbodenheizungen keine größeren Wärmeverluste nach unten hinnehmen zu müssen, ist es weiterhin erforderlich, zwischen der Oberseite des Holz-Beton-Verbundelements und der Fußbodenheizung eine Dämmschicht einzuziehen. Dies führt wiederum zu steigenden Baukosten.

Eine Aufgabe der vorliegenden Erfindung besteht somit darin, ein Holz-Beton-Verbundelement bereitzustellen, welches die genannten Nachteile vermeidet und eine bessere Kopplung mit Wärmetransport- oder Wärmeerzeugungselementen ermöglicht.

Diese Aufgabe wird durch das erfindungsgemäße Holz-Beton-Verbundelement gelöst, wobei innerhalb des Betonbauteils ein Wärmetransport- oder Wärmeerzeugungselement angeordnet ist, welches über Wärmeaustauschflächen im Wesentlichen gleichmäßig über die Fläche des Betonbauteils verteilt Wärme aufnehmen oder abgeben kann, wobei die Wärmeaustauschflächen vollständig vom Betonbauteil eingeschlossen sind.

Eine derartige Integration von Wärmetransport- oder Wärmeerzeugungselementen in das Betonbauteil des Verbundelements ermöglicht die Klimatisierung von Bauwerken, ohne dass dafür separate Wärmetauscheinheiten vorgesehen werden müssen. Auf diese Weise kann das Holz-Beton-Verbundelement als Heizung dienen oder auch Kühlfunktionen übernehmen, wenn über das integrierte Wärmetransportelement aus dem Betonbauteil Wärme abgeführt wird, so dass dieses wiederum Wärme aus der Umgebung aufnehmen kann. Außerdem können zusätzliche Arbeitsschritte eingespart werden, da eine separate Heizung bzw. Klimatisierung im Bauwerk nach dem Einsetzen des Holz-Beton-Verbundelements nicht mehr eingebaut werden muss. Ein weiterer wesentlicher Vorteil besteht darin, dass zumindest Anteile des Baumassekerns unmittelbar in die Klimatisierungseinheit eingeschlossen sind und dadurch als Wärmepuffer und Wärmespeicher dienen. Durch die großflächige Wärmeübertragung am Betonbauteil werden günstige Klimabedingungen im Baukörper erreicht, wie dies beispielsweise von Fußbodenheizungen bekannt ist, wobei jedoch die zusätzlichen Installationsschritte zum Einbau herkömmlicher Fußbodenheizungen eingespart werden. Dies beschleunigt die Bauzeit erheblich, da auch die Trocknungszeiten für Estrichschichten vollständig entfallen.

Durch Integration des Wärmetransport- oder Wärmeerzeugungselements in die Betonschicht des Verbundelements, kommt es zu einer Wärmeenergieaufnahme. Durch die unterschiedliche Wärmeleitfähigkeit und das unterschiedliche Wärmespeichervermögen von Beton und Holz erfolgt die Wärmeaufnahme in der Holzschicht bedeutend langsamer und weniger intensiv als in der Betonschicht. Die Holzschicht wirkt eher isolierend, so dass eine Wärmeenergieaufnahme, -speicherung und -abgabe vorwiegend über die Betonschicht erfolgt.

Ist die statisch aktive Holzschicht flächig ausgebildet, wie etwa bei einer Brettstapeldecke, können jegliche weiteren Isoliermaßnahmen entfallen. Bei beabstandeten Konstruktionen, wie z.B. bei Holzbalken, müssen lediglich die Zwischenräume zwischen den Balken zur Verhinderung der ungewollten Wärmeabgabe auf der entsprechenden Betonschichtseite isoliert werden.

Der Unterschied zu üblichen Ausführungen von Fußboden- oder Wandheizungen besteht insbesondere darin, dass die Tragkonstruktion selbst und nicht eine zusätzlich angebrachte einseitige isolierte Schicht, wie z.B. Heizestrich bei üblicher Ausführung von Fußbodenheizungen, für die Raumklimatisierung genutzt werden kann.

Gemäß einer bevorzugten Ausführungsform werden mehrere Rohrabschnitte als Wärmetransportelement im Betonbauteil verlegt, durch welche ein Wärmetransportmedium geführt wird. Beispielsweise können Kunststoffrohre in Schlangenlinien gleichmäßig im Betonbauteil während dessen Herstellung eingegossen werden. Auf diese Weise erfolgt eine gleichmäßige Erwärmung des Betonbauteils, wenn ein erwärmtes Medium durch die Rohre strömt. Wird stattdessen ein kaltes Medium durch die Rohre geführt, wirkt das Betonbauteil als Wärmesenke, wodurch der angrenzende Raum abgekühlt wird. Das Betonbauteil ist relativ gut wärmeleitend, so dass die Reaktionszeiten für die Klimatisierung gering gehalten werden können.

Das Wärmetransportmedium wird in an sich bekannter Weise an eine Heiz- und/oder Kühleinrichtung angeschlossen, die vorzugsweise mit einer geeigneten Steuereinrichtung gekoppelt ist, um die in den jeweiligen Räumen gewünschten Temperaturen einzustellen.

Bei einer abgewandelten Ausführungsform werden in das Betonbauteil elektrische Heizleiter als Wärmeerzeugungselement eingeschlossen. Durch Anschluss an eine geregelte Stromversorgung führen diese Heizleiter dem Betonbauteil Wärme zu, welche an die angrenzenden Räume abgegeben wird.

Da bei der Herstellung des Holz-Beton-Verbundelements im Betonbauteil zweckmäßigerweise Armierungsgitter eingelegt werden, um die erforderliche Stabilität des Betonbauteils zu gewährleisten, ist es vorteilhaft, das Wärmetransport- oder Wärmeerzeugungselement auf diese Armierungsgitter aufzulegen, bevor durch Einbringen weiterer Betonmasse das Betonbauteil fertiggestellt wird. Während dieses Herstellungsschrittes sind die einzelnen Abschnitte des Wärmetransport- oder Wärmeerzeugungselements somit in der gewünschten Weise positioniert, wobei bei Bedarf eine zusätzliche Fixierung durch Verbindungsmittel am Armierungsgitter vorgenommen werden kann.

Je nach Anwendungsfall kann das Holzbauteil des Verbundelements aus mehreren voneinander beabstandeten Holzträgern (Massivholz) oder aus in Brettstapelbauweise zusammengefügten Brettern oder Kanthölzern bestehen. Es ist dabei vorteilhaft, wenn die Befestigung und Lagerung des Verbundelements ausschließlich über das Holzbauteil vorgenommen wird. Das Holzbauteil dient auf diese Weise gleichzeitig der Wärmeentkopplung zwischen dem klimatisierten Betonbauteil und den angrenzenden Bauwerksabschnitten.

Vorzugsweise wird das Betonbauteil an der Unterseite und an den Seitenflächen vom Holzbauteil umschlossen, so dass zusätzliche Dämmmaßnahmen überflüssig sind. Dazu können spezielle Schalungsbretter an den Seiten des Betonbauteils belassen werden, die währen der Herstellung sowieso für die Formgebung benötigt werden.

Um eine dauerhafte stabile Verbindung zwischen Holzbauteil und Betonbauteil herzustellen, können diese über sogenannte Querkraftanker miteinander gekoppelt sein, wobei die Querkraftanker Bestandteil der Armierung des Betonbauteils sein können. Derartige Maßnahmen sind aus dem o.g. Stand der Technik jedoch bekannt, so dass auf eine detaillierte Beschreibung an dieser Stelle verzichtet werden kann.

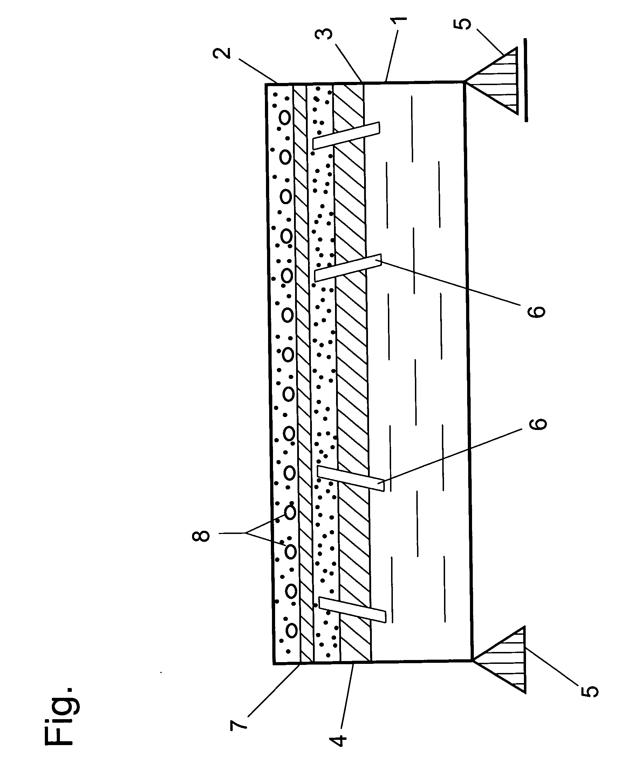

Weitere Vorteile, Einzelheiten und Weiterbildungen ergeben sich aus der nachfolgenden Beschreibung einer bevorzugten Ausführungsform der Erfindung, unter Bezugnahme auf die Zeichnung.

Die einzige Figur zeigt eine vereinfachte Querschnittsansicht eines erfindungsgemäßen Holz-Beton-Verbundelements.

Das Holz-Beton-Verbundelement besteht hauptsächlich aus einem Holzbauteil 1 und einem Betonbauteil 2, die entlang einer Verbundfläche 3 miteinander verbunden sind. Um unterschiedliche Materialausdehnungen aufnehmen zu können, befindet sich in der Ebene der Verbundfläche 3 vorzugsweise eine Trenn- und Gleitschicht, die beispielsweise durch eine Folie 4 oder ein geeignetes Gewebe gebildet wird. Bei der in der Figur dargestellten Ausführungsform ist das Holzbauteil 1 als massiver Holzträger ausgestaltet, der nach dem Einbau auf Lagern 5 gelagert ist.

An den Seitenflächen des Betonbauteils 2 können ebenfalls Holzabschnitte ausgebildet sein (nicht dargestellt), wenn eine Wärmeentkopplung zum angrenzenden Baukörper gewünscht ist.

Das Holzbauteil 1 kann bei abgewandelten Ausführungsformen auch aus einem Brettstapelelement gebildet sein, welches aus einer Vielzahl aneinandergereihter Bretter bzw. Kanthölzer besteht. Zur Kraftaufnahme zwischen dem Holzbauteil 1 und dem Betonbauteil 2 sind mehrere Querkraftanker 6 vorgesehen, die durch die Verbundfläche 3 verlaufen und sich in die angrenzenden Bauteile erstrecken. Insbesondere ist es vorteilhaft, wenn in die zum Betonbauteil gewandte Fläche des Brettstapelelements schräg zur Haupterstreckungsebene verlaufende Nuten eingebracht sind, in welche Flachstähle als Querkraftanker 6 eingetrieben werden. Diese Flachstähle ragen über das Brettstapelelement hinaus und erstrecken sich durch die ggf. vorhandene Folie 4 hindurch in das Betonbauteil 2, um die auftretenden Kräfte zwischen diesen Bauteilen zu verteilen.

Das Betonbauteil 2 kann aus unterschiedlichen Materialmischungen bestehen. Insbesondere eignen sich Leichtbeton, Porenbeton oder Asphaltbeton. Um dem Betonbauteil eine ausreichende Festigkeit zu geben, ist in an sich bekannter Weise ein Armierung 7 integriert. Die Armierung 7 kann bei Bedarf mit den Querkraftankern 6 verbunden werden oder diese als integralen Bestandteil umfassen.

Weiterhin sind im Betonbauteil 2 Wärmetransport- oder Wärmeerzeugungselemente eingeschlossen. Im dargestellten Beispiel verlaufen zahlreiche Heizungsrohre 8 im Betonbauteil, die an ihren Oberflächen Wärmeaustauschflächen bereitstellen, über welche ein Wärmeaustausch mit dem Betonbauteil stattfindet. Die Heizungsrohre 8 sind im Wesentlichen gleichmäßig über die Fläche des Betonbauteils verteilt. Bei besonderen Anwendungsfällen kann es zweckmäßig sein, einzelne Bereiche des Betonbauteils nicht mit Wärmetransport- oder Wärmeerzeugungselementen zu belegen, um in diesen Bereichen eine Klimatisierung bewusst auszuschließen. Der Wärmeaustausch zwischen den eingeschlossenen Rohren und dem Betonbauteil kann in beiden Richtungen erfolgen, so dass sowohl ein Heizungsbetrieb als auch ein Kühlbetrieb denkbar ist.

Die Heizungsrohre 8 können für eine weitere Reduzierung des Wärmeübergangswiderstands mit vergrößerten Wärmeaustauschflächen, beispielsweise in Form von Wärmeleitblechen, gekoppelt sein. Ebenso ist es denkbar, dass keine Heizungsrohre, sondern stattdessen elektrische Heizleiter verwendet werden.

Bei der in der Figur dargestellten Ausführungsform liegen die Heizungsrohre 8 unmittelbar auf der Armierung 7 auf, wodurch während der Herstellung des Betonbauteils eine ausreichende Fixierung der Rohre ermöglicht wird. Außerdem wird der Wärmeaustausch durch die unmittelbare Kopplung mit den Armierungselementen weiter verbessert.

Bei der in der Figur dargestellten Ausführungsform wird das Holz-Beton-Verbundelement als Zwischendecke verwendet. Durch das Holzbauteil ist dabei automatisch eine Wärmeisolation nach unten gegeben. Auf zusätzliche Wärmedämmmaßnahmen kann daher zumindest in den Bereichen, in denen das Holzbauteil ausgebildet ist, verzichtet werden. Wenn das Holzbauteil aus mehreren voneinander beabstandeten Trägern besteht, kann zwischen diesen Holzträgern eine zusätzliche nichttragende Holzschalung angebracht sein, um auch in diesen Bereichen eine Wärmedämmung zu gewährleisten. Sofern als Holzbauteil ein Brettstapelelement verwendet wird, ist das Betonbauteil automatisch auf der gesamten Unterseite wärmegedämmt.

Es ist darauf hinzuweisen, dass das erfindungsgemäße Holz-Beton-Verbundelement nicht nur als Zwischendecke, sondern auch als Wandelement eingesetzt werden kann. Auf diese Weise lässt sich eine preiswerte Wandheizung realisieren, die bisher zumeist nur durch aufwändige Vorsatzschalenwände aufgebaut werden konnte. Die bei bekannten mit Warmluft beheizten Wandheizungselementen auftretenden Strömungsprobleme werden durch das Holz-Beton-Verbundelement vollständig vermieden, so dass eine gleichmäßige Wärmeverteilung im Betonbauteil unabhängig von der Einbaulage erzielt wird. Abwandlungen und Weiterbildungen der beschriebenen Erfindung sind ohne weiteres denkbar, ohne dass dadurch der Schutzbereich der angefügten Ansprüche verlassen wird.

### Bezugszeichenliste

- 1: Holzbauteil
- 2: Betonbauteil
- 3: Verbundfläche
- 4: Folie
- 5: Lager
- 6: Querkraftanker
- 7: Armierung
- 8: Heizungsrohre

## Patentansprüche

1. Holz-Beton-Verbundelement aus einem Holzbauteil (1), und einem Betonbauteil (2), wobei das Holzbauteil und das Betonbauteil entlang einer Verbundfläche (3) aneinandergrenzen **dadurch gekennzeichnet, dass** innerhalb des Betonbauteils (2) ein Wärmetransport- oder Wärmeerzeugungselement (8) angeordnet ist, welches über Wärmeaustauschflächen im Wesentlichen gleichmäßig über die Fläche des Betonbauteils verteilt Wärme aufnehmen oder abgeben kann, wobei die Wärmeaustauschflächen des Wärmetransport- oder Wärmeerzeugungselements (8) im Wesentlichen vollständig vom Betonbauteil eingeschlossen sind.

2. Holz-Beton-Verbundelement nach Anspruch 1, **dadurch gekennzeichnet, dass** als Wärmetransportelement mehrere Rohrabschnitte (8) im Betonbauteil (2) verlegt sind, durch welche ein Wärmetransportmedium geführt wird.

3. Holz-Beton-Verbundelement nach Anspruch 2, **dadurch gekennzeichnet, dass** das Wärmetransportelement (8) an eine Heizund/oder Kühleinrichtung angeschlossen ist.

4. Holz-Beton-Verbundelement nach Anspruch 1, **dadurch gekennzeichnet, dass** als Wärmeerzeugungselement elektrische Heizleiter im Betonbauteil (2) eingeschlossen sind, die an eine geregelte Stromversorgung angeschlossen sind.

5. Holz-Beton-Verbundelement nach einem der Ansprüche 1 bis 4, **dadurch gekennzeichnet, dass** im Betonbauteil (2) ein Armierungsgitter (7) vorgesehen ist, auf welchem das Wärmetransport- oder Wärmeerzeugungselement (8) aufgelegt wird, bevor die das Armierungsgitter einschließende Betonmasse zur Ausbildung des Betonbauteils eingebracht wird.

6. Holz-Beton-Verbundelement nach einem der Ansprüche 1 bis 5, **dadurch gekennzeichnet, dass** das Holzbauteil (1) durch mehrere voneinander beabstandete Holzträger gebildet ist.

7. Holz-Beton-Verbundelement nach einem der Ansprüche 1 bis 5, **dadurch gekennzeichnet, dass** das Holzbauteil (1) aus einer Vielzahl von in Brettstapelbauweise zusammengefügten Brettern oder Kanthölzern besteht.

8. Holz-Beton-Verbundelement nach Anspruch 7, **dadurch gekennzeichnet, dass** zwischen den in Brettstapelbauweise zusammengefügten Brettern oder Kanthölzern mehrere Verbundstege eingefügt sind, die sich im wesentlichen entlang der gesamten Länge der Bretter oder Kanthölzer über die Verbundfläche (3) hinaus in das Betonbauteil (2) erstrecken.

9. Holz-Beton-Verbundelement nach einem der Ansprüche 6 bis 8, **dadurch gekennzeichnet, dass** das Holzbauteil (1) und das Betonbauteil (2) über Querkraftanker (6) gekoppelt sind, die einerseits im Holzbauteil befestigt und andererseits vom Betonbauteil (3) umfasst sind.

10. Holz-Beton-Verbundelement nach Anspruch 9, **dadurch gekennzeichnet, dass** die Querkraftanker (6) Bestandteil der Armierung (7) des Betonbauteils (2) sind.

11. Holz-Beton-Verbundelement nach einem der Ansprüche 1 bis 10, **dadurch gekennzeichnet, dass** das Betonbauteil (2) aus Leichtbeton, Porenbeton oder Asphaltbeton besteht.

12. Holz-Beton-Verbundelement nach einem der Ansprüche 1 bis 11, **dadurch gekennzeichnet, dass** zwischen Holzbauteil (1) und Betonbauteil (2) eine Trenn- und Gleitschicht (4) angeordnet ist.

13. Holz-Beton-Verbundelement nach einem der Ansprüche 1 bis 12, **dadurch gekennzeichnet, dass** es als Zwischendeckenelement gestaltet ist, wobei das Holzbauteil (1) auf der Unterseite und das Betonbauteil (2) auf der Oberseite positioniert ist.

14. Holz-Beton-Verbundelement nach Anspruch 13, **dadurch gekennzeichnet, dass** der Anschluss der Zwischendecke an Tragelemente und Seitenwände nur über das Holzbauteil (1) erfolgt, um eine Wärmeentkopplung zum Betonbauteil (2) zu erzielen.

15. Holz-Beton-Verbundelement nach einem der Ansprüche 1 bis 12, **dadurch gekennzeichnet, dass** es als Wandelement gestaltet ist.
